# EUROPÄISCHE PATENTANMELDUNG

(11) **EP 2 708 756 A2**
(43) Veröffentlichungstag der Anmeldung: **19.03.2014**
(21) Anmeldenummer: 13183742.9
(22) Anmeldetag: 10.09.2013
(51) Int. Cl.: F15B 11/076

(54) **Verriegelungsvorrichtung für Lastentransportfahrzeuge**

(30) Priorität: 12.09.2012 DE 102012216156
(71) Anmelder: Franz Xaver Meiller Fahrzeug- und Maschinenfabrik-GmbH & Co KG, 80997 München (DE)
(72) Erfinder: Meißner, Uwe, 85560 Ebersberg (DE)
(74) Vertreter: Tiesmeyer, Johannes

(57) **Zusammenfassung**

Die Erfindung betrifft eine Verriegelungsvorrichtung (1) für Lasten für den Transport einem Lastentransportfahrzeug (100), insbesondere einem Absetzkipper, und/oder für Fahrzeugteile eines Lastentransportfahrzeugs (100), umfassend einen hydraulischen Verriegelungszylinder (3, 8), ein Hydrauliksperrventil (6), das mit dem Verriegelungszylinder (3, 8) hydraulisch verbunden ist, und ein Verriegelungselement (2), das mechanisch mit dem Verriegelungszylinder (3, 8) verbunden ist, wobei mittels des Verriegelungselements (2) eine Last oder ein Fahrzeugteil mit dem Lastentransportfahrzeug (100) verriegelbar ist, indem das Verriegelungselement (2) von einer Entriegelungsstellung in eine Verriegelungsstellung gebracht wird. Erfindungsgemäß wird die Verriegelungsvorrichtung (1) fortgebildet, indem pneumatischer Druck unter Verwendung eines Pneumatik-Hydraulik-Wandlers (23, 14, 9, 7, 50) nutzbar ist, um den Verriegelungszylinder (3, 8) mit Hydraulikflüsssigkeit zu füllen, wobei zugleich das Verriegelungselement (2) in die Verriegelungsstellung bringbar ist, und wobei ein Abfluss von Hydraulikflüssigkeit aus dem Verriegelungszylinder (3, 8) mit einem Hydrauliksperrventil (6) verhinderbar ist, sodass der Verriegelungszylinder (3, 8) hydraulisch arretierbar ist.

## Beschreibung

Diese Erfindung betrifft eine Verriegelungsvorrichtung für Lasten für den Transport mit einem Lastentransportfahrzeug, insbesondere einem Absetzkipper, und/oder für Fahrzeugteile eines Lastentransportfahrzeugs, umfassend einen hydraulischen Verriegelungszylinder, ein Hydrauliksperrventil, das mit dem Verriegelungszylinder hydraulisch verbunden ist, ein Verriegelungselement, das mechanisch mit dem Verriegelungszylinder verbunden ist, wobei mittels des Verriegelungselements eine Last oder ein Fahrzeugteil mit dem Lastentransportfahrzeug verriegelbar ist, indem das Verriegelungselement von einer Entriegelungsstellung in eine Verriegelungsstellung gebracht wird. Weiter betrifft die Erfindung ein Lastentransportfahrzeug.

Beim Transport vom Lasten mit Lastentransportfahrzeugen ist es erforderlich, die Ladung zu sichern. Insbesondere wiederholt verwendbare Transportbehältnisse wie etwa insbesondere Absetz- oder Abrollcontainer, Muldencontainer und dergleichen können durch Formschluss mit dem Lastentransportfahrzeug verbunden werden. Um diesen Formschluss freigeben und lösen zu können, sind Verriegelungssysteme bekannt. Es sind auch Verriegelungssysteme zu dem Zweck bekannt, Fahrzeugteile wie etwa Bordwände oder andere bewegliche Fahrzeugteile zu verriegeln, so dass sie in einer Stellung gehalten sind, die für eine Transportfahrt geeignet ist.

Die Gebrauchsmusterschrift DE 20 2005 021 742 U1 offenbart ein Lastentransportfahrzeug, insbesondere einen Absetzkipper, der mit einem Verriegelungsmechanismus zur Ladungssicherung ausgerüstet ist. Der Inhalt der DE 20 2005 021 742 U1 soll als in die vorliegende Patentanmeldung aufgenommen gelten. Insbesondere der dort dargestellte hydraulisch mechanische Verriegelungsmechanismus kann in allen Ausführungsformen mit der Verriegelungsvorrichtung gemäß der Erfindung der vorliegenden Erfindung kombiniert werden.

Aus der DE 20 2005 021 742 U1 ist bekannt, den Verriegelungsmechanismus mit einem hydraulischen Zylinder zu betätigen. Dies setzt voraus, dass das Lastentransportfahrzeug über eine hydraulische Anlage verfügt, mit der der Hydraulikzylinder betätigt werden kann. Viele Lastentransportfahrzeuge sind jedoch nur mit einer Pneumatikanlage, insbesondere zur Bremsbetätigung und/oder für eine Luftfederung, ausgerüstet. Der Einsatz des Verriegelungsmechanismus nach dem Stand der Technik erfordert somit das Vorsehen einer Hydraulikpumpe und einer entsprechenden Steuerung dafür, was kostenintensiv ist. Ganz besonders gilt dies für als Anhänger ausgebildete Lastentransportfahrzeuge, wobei denen eine Versorgung mit Hydraulikflüssigkeit und -druck aus einem Zugfahrzeug zusätzlichen Aufwand verursacht. Im Stand der Technik sind außerdem Verriegelungsvorrichtungen bekannt, die pneumatisch betätigt werden. Nachteilig an einer pneumatischen Betätigung ist jedoch, dass Luft im Vergleich zu Flüssigkeit vergleichsweise stark kompressibel ist, so dass eine hohe Nachgiebigkeit beim pneumatischen Andrücken von Verriegelungselementen zu erwarten ist. Nachteilig bei einem pneumatischen Herstellen von Formschluss, beispielsweise durch Einschieben eines Riegels in eine geeignete Aufnahme an dem zu verriegelnden Transportbehälter, führt das hierfür zwangsläufig erforderliche Spiel dazu, dass sich der Transportbehälter innerhalb dieses Spiels auf dem Lastentransportfahrzeug bewegen kann, was unter Umständen zu starker Geräuschentwicklung und Verschleiß des Verriegelungsmechanismus führen kann.

Aufgabe der vorliegenden Erfindung ist es, die Nachteile des Standes der Technik zu überwinden und eine universell und verschleißarm einsetzbare Verriegelungsvorrichtung bereitzustellen.

Gegenstand der vorliegenden Erfindung ist eine Verriegelungsvorrichtung, bei der pneumatischer Druck unter Verwendung eines Pneumatik-Hydraulik-Wandlers nutzbar ist, um den Verriegelungszylinder mit Hydraulikflüssigkeit zu füllen, wobei zugleich das Verriegelungselement in die Verriegelungsstellung bringbar ist, und wobei ein Abfluss von Hydraulikflüssigkeit aus dem Verriegelungszylinder mit dem Hydrauliksperrventil verhinderbar ist, so dass der Verriegelungszylinder hydraulisch arretierbar ist.

Eine solche Verriegelungsvorrichtung hat den Vorteil, dass durch die hydraulische Verriegelung eine starre und stufenlose Verriegelung von Lasten oder Fahrzeugteilen ermöglicht wird. Insbesondere kann ein Verriegelungselement in Verriegelungsrichtung vorgeschoben werden, bis kein Spiel mehr zwischen dem Verriegelungsmechanismus und dem zu verriegelnden Element mehr vorhanden ist. Durch die hydraulische Arretierung in dieser Position kann die Verriegelung quasi spielfrei durchgeführt werden. Außerdem können durch die erfindungsgemäße Verriegelungsvorrichtung auch größere Toleranzen des zur verriegelnden Elements ausgeglichen werden. Ein weiterer Vorteil der erfindungsgemäßen Verriegelungsvorrichtung ist deren Unabhängigkeit vom Vorhandensein einer Versorgung mit hydraulischem Druck. Durch den Pneumatik-Hydraulik-Wandler kann die Erfindung zum Einsatz kommen, sobald eine Druckluftversorgung vorhanden ist. Dies ist bei Lastkraftwagen und deren Anhänger aufgrund einer Druckluft-Bremsanlage im Allgemeinen der Fall. Aufgrund der im Allgemeinen geringeren Drücke bei Druckluftanlagen im Vergleich zu Hydraulikanlagen und aufgrund des Wegfalls von Umweltbelastungen bei Leckage ist Druckluft zudem weniger aufwendig und weniger risikoreich nutzbar.

Die Erfindung umfasst somit eine Verriegelungsvorrichtung, die mit Hilfe eines Pneumatik-Hydraulik-Wandlers betätigt werden kann. Im Erfindungskern dient die Hydraulik jedoch nur zur Bewirkung einer stufenlosen Arretierung, wobei der Verriegelungszylinder in Varianten der Erfindung zusätzlich dazu genutzt werden kann, die Bewegung eines oder mehrerer Verriegelungselemente zu bewirken. Alternativ zu diesen Varianten werden das oder die Verriegelungselemente unmittelbar von dem Pneumatik-Hydraulik-Wandler bewirkt, beispielsweise mittels pneumatisch erzeugter Kräften.

Der Begriff Zylinder im Sinne dieser Patentanmeldung umfasst auch dessen Kolben bzw. Kolbenstange. Ein Verriegelungselement kann eine Klaue, ein Bolzen, ein Riegel, ein Haken oder dergleichen sein und zudem nicht nur aus einem einzelnen Element bestehen, sondern aus mehreren zusammenwirkenden Einzelelementen bestehen.

In einer Ausführungsform der Verriegelungsvorrichtung umfasst der Pneumatik-Hydraulik-Wandler einen Pneumatikzylinder. Mit einem Pneumatikzylinder kann pneumatischer Druck in mechanische Kräfte gewandelt werden, die zur Betätigung von einem oder mehreren Verriegelungselementen und/oder zum Füllen des Verriegelungszylinders mit Hydraulikflüssigkeit durch Bewegen des Verriegelungszylinders dienen, wobei es möglich ist, dass der Verriegelungszylinder durch die pneumatische Betätigung des oder der Verriegelungselemente Hydraulikflüssigkeit aus einem Reservoir quasi drucklos ansaugt. Die Hydraulikflüssigkeit in dem Verriegelungszylinder dient nach dem Abschließen von dessen Volumen durch ein Hydrauliksperrventil der Arretierung.

In einer weiteren Ausführungsform der Verriegelungsvorrichtung weist der Pneumatik-Hydraulik-Wandler eine mechanische Verbindung zwischen dem Pneumatikzylinder und dem Verriegelungszylinder auf. Durch die mechanische Verbindung kann der Verriegelungszylinder durch pneumatisch erzeugte Kräfte mit Hydraulikflüssigkeit gefüllt werden.

In noch einer weiteren Ausführungsform der Verriegelungsvorrichtung umfasst der Pneumatik-Flydraulik-Wandler einen hydraulischen Verdrängungszylinder, der hydraulisch mit dem Verriegelungszylinder verbunden ist, und der mechanisch mit dem Pneumatikzylinder verbunden ist, so dass durch Beaufschlagung des Pnematikzylinders mit pneumatischem Druck der Verriegelungszylinder mit Hydraulikflüssigkeit aus dem Verdrängungszylinder füllbar ist. Insbesondere kann über die mechanische Verbindung zwischen dem Pneumatikzylinder und dem Verdrängungszylinder Hydraulikdruck aufgebaut werden, mit dessen Hilfe der Verriegelungszylinder betätigt werden kann. Alternativ kann statt mit dem Verriegelungszylinder mit der mechanischen Verbindung zwischen dem Pneumatikzylinder und dem Verdrängungszylinder wenigstens ein Verriegelungselement betätigt werden. In diesem Fall kann der Verriegelungszylinder quasi drucklos aus dem Verdrängungszylinder gefüllt werden. Der Verriegelungszylinder ist erfindungsgemäß mit dem Verriegelungselement verbunden und verändert sein Volumen gekoppelt mit der mechanischen Verbindung zwischen dem Pneumatikzylinder und Verdrängungszylinder, die ebenfalls mit dem Verriegelungselement verbunden sind. Der Zweck des Verriegelungszylinders besteht daher in diesem Fall im Wesentlichen in der stufenlosen Arretierungsfunktion für die Verriegelungselemente.

In einer weiteren Ausführungsform sind der Verdrängungszylinder und der Verriegelungszylinder in einem doppeltwirkenden Zylinder vereint. Insbesondere ist dies ein Gleichlaufzylinder, was für den Fall, dass sowohl der Verdrängungszylinder als auch der Verriegelungszylinder mechanisch mit dem Pneumatikzylinder verbunden sind, vorteilhaft ist. Bei einem Gleichlaufzylinder ist das verdrängte Volumen pro Bewegungseinheit in beiden Kammern normalerweise gleich groß, so dass in erster Näherung kein Volumenausgleich für das verdrängte und das aufgenommene Hydraulikflüssigkeitsvolumen erforderlich ist. Jedoch kann eine geringe Volumenkorrektur aufgrund von Temperaturdehnungen und Fertigungstoleranzen des Gleichlaufzylinders erforderlich sein. Alternativ kann für größere Volumina, insbesondere wenn der Verdrängungszylinder und der Verriegelungszylinder nicht in einem Gleichlaufzylinder, sondern in einem Normalzylinder vereint sind, ein Volumenausgleichsbehälter wie etwa ein Reservoir vorgesehen sein. Als Volumenausgleichsvorrichtung kann für kleine Volumina, insbesondere im Falle eines Gleichlaufzylinders, die Elastizität von Schläuchen, Rohren oder dergleichen, insbesondere von ohnehin vorhandenen Elementen, genutzt werden. Die hydraulischen Anschlüsse von Verriegelungszylinder und Verdrängungszylinder sind miteinander verbunden. In einer entsprechenden Verbindungsleitung zwischen dem Verdrängungszylinder und dem Verriegelungszylinder ist vorteilhaft das Hydrauliksperrventil angeordnet. Auf diese Weise wirkt die Arretierung nicht nur durch den Verriegelungszylinder in die Entriegelungsrichtung, sondern durch den Verdrängungszylinder auch in die Verriegelungsrichtung des einen oder der mehreren Verriegelungselemente.

In einer weiteren Ausführungsform der Verriegelungsvorrichtung ist zusätzlich zu dem Verdrängungszylinder und dem Verriegelungszylinder auch ein Pneumatikzylinder in einem einzelnen Zylinderelement vereint. Eine Kolbenstange in einem solchen Zylinder mit mehreren Kammern und mehreren Kolben kann die mechanische Verbindung zwischen dem Pneumatikzylinder, dem Verriegelungszylinder und dem Verdrängungszylinder bilden. Es ergibt sich bevorzugt eine kompakte Einheit aus dem Pneumatikzylinder, dem Verriegelungszylinder und dem Verdrängungszylinder, vorzugsweise in Form eines Tandemzylinders.

In einer weiteren Ausführungsform ist der Pneumatikzylinder als doppeltwirkender Pneumatikzylinder ausgeführt. In dieser Ausführungsform kann der Pneumatikzylinder durch eine entsprechende Umsteuerung der Druckbeaufschlagung von einer ersten Zylinderkammer zu einer zweiten Zylinderkammer sowohl das Verriegeln als auch das Entriegeln eines Verriegelungselements bewirken. Im Falle der Ausführungsform, in der die Zylinder zu einem Zylinderelement vereint sind, ergibt sich ein Zylinderelement mit einer einzelnen Kolbenstange und vier Zylinderkammern, von denen zwei dem Pneumatikzylinder zugeordnet sind, und jeweils eine dem Verriegelungszylinder und eine dem Verdrängungszylinder. In einem Ausführungsbeispiel ist ein einzelner doppeltwirkender Pneumatikzylinder mit einem einzelnen hydraulischem Gleichlaufzylinder über die jeweiligen Kolbenstangen mechanisch miteinander verbunden, wobei vorzugsweise die Kolbenstangen der Zylinder miteinander fluchten oder ein Fluchtungskorrekturausgleich vorgesehen ist. Mit einer der beiden Kolbenstangen kann ein Verriegelungselement mechanisch direkt oder über Zwischenelemente verbunden sein.

In einer weiteren Ausführungsform der Verriegelungsvorrichtung umfasst der Pneumatik-Hydraulik-Wandler einen druckfesten Behälter mit einem innenliegenden Trennelement, insbesondere einer Membran, wobei das Trennelement den Behälter in eine Hydraulikkammer mit einem Hydraulikanschluss und eine Pneumatikkammer mit einem Pneumatikanschluss mit jeweils variablem Volumen fluiddicht unterteilt, wobei bei Beaufschlagung der Pneumatikkammer mit pneumatischem Druck aus der Hydraulikkammer Hydraulikflüssigkeit entnehmbar und dem Verriegelungszylinder zuführbar ist.

In dieser Ausführungsform wird Pneumatikdruck in dem Behälter in einen Hydraulikdruck umgewandelt, der wiederum verwendet wird, um den Verriegelungszylinder hydraulisch auszufahren. Das Hydrauliksperrventil ist in einer Leitung zwischen dem Hydraulikanschluss des Behälters und dem Verriegelungszylinder angeordnet. In einer weiteren Ausführungsform der Verriegelungsvorrichtung ist der Verriegelungszylinder als doppeltwirkender Hydraulikzylinder ausgeführt. In dieser Ausführungsform kann der Teil des doppeltwirkenden Hydraulikzylinders, der den Verriegelungszylinder in Entriegelungsrichtung betätigt, wenn er mit Hydraulikflüssigkeit gefüllt wird, zur Entriegelung der Verriegelungsvorrichtung genutzt werden. Dazu kann hydraulischer Druck aus einem zweiten Behälter zur Pneumatik-Hydraulik-Wandlung oder einem dafür vorgesehenen pneumatisch angetriebenen Verdrängungszylinder, der hydraulischen Druck erzeugt, verwendet werden.

In einer weiteren Ausführungsform der Verriegelungsvorrichtung ist das Entriegeln der Verriegelungsvorrichtung durch Überführen eines Verriegelungselements von der Verriegelungsstellung in die Entriegelungsstellung durch Federkraft eines Entriegelungsfederelements bewirkbar. Vorzugsweise wird das Entriegelungsfederelement beim Verriegeln des Verriegelungselements gespannt, so dass die Aufhebung der Arretierung des Verriegelungselements zu einer Entriegelung führt, indem das Verriegelungselement mittels des Entriegelungsfederelements in seine Entriegelungsstellung gebracht wird. Als Entriegelungsfederelemente kommen Zug- und/oder Druck-Schraubenfedern, Schenkelfedern, Torsionsfedern, Gummielemente oder dgl., u. U. mit zusätzlichen mechanischen Elementen, in Betracht. Das Entriegelungsfederelement ist vorzugsweise mit einem Ende an dem Lastentransportfahrzeug befestigt, und mit einem anderen Ende an dem Verriegelungselement oder einem damit verbundenen Element befestigt, so dass das Entrieglungsfederelement gespannt wird, wenn das Verriegelungselement von seiner Entriegelungsstellung in seine Verriegelungsstellung gebracht wird.

In einer weiteren Ausführungsform umfasst der Pneumatik-Hydraulik-Wandler ein pneumatisch vorspannbares Verriegelungsfederelement, mittels dessen Vorspannung der hydraulische Verriegelungszylinder mechanisch von der Entriegelungsstellung in die Verriegelungsstellung des Verriegelungselements bewegbar ist, so dass sich der Verriegelungszylinder mit Hydraulikflüssigkeit füllt. In dieser Ausführungsform wird das Verriegelungselement mit dem Verriegelungsfederelement gespannt, wenn die Verriegelungsvorrichtung von der Verriegelungsstellung in die Entriegelungsstellung gebracht wird. Die Verriegelungsvorrichtung wird dann in der Entriegelungsstellung arretiert, beispielsweise durch Schließen des Hydrauliksperrventils. Das Aufheben der Arretierung kann zum Übergang in die Verriegelungsstellung führen. Dabei strömt Hydraulikflüssigkeit in einen Verriegelungszylinder, der erfindungsgemäß mit dem Verriegelungselement verbunden ist. Dazu ist kein Hydraulikdruck erforderlich, da der Verriegelungszylinder durch die Federkraft Hydraulikflüssigkeit ansaugt. Wenn die Verriegelungsstellung erreicht ist, wird das Flydrauliksperrventil geschlossen und die Verriegelungsvorrichtung damit in der Verriegelungsstellung arretiert. Das Entriegeln erfolgt sodann nach dem Öffnen des Hydrauliksperrventils mit pneumatisch erzeugter Kraft, beispielsweise aus einem Pneumatikzylinder. Die pneumatisch erzeugte Kraft ist dabei stärker als die Federkraft des Verriegelungsfederelements. Für das Bewirken der Entriegelung kann ein Kolben eines Pneumatikzylinders mechanisch mit dem Verriegelungselement verbunden sein.

In einer weiteren Ausführungsform der Verriegelungsvorrichtung ist das Hydrauliksperrventil handbetätigbar, oder elektrisch, oder elektromechanisch, insbesondere elektromagnetisch, automatisiert mechanisch oder pneumatisch oder auf weitere geeignete Weise betätigbar. Vorzugsweise weist das Hydrauliksperrventil einen Elektromagneten auf, mit dem es geöffnet und/oder geschlossen werden kann. Ebenfalls bevorzugt ist das Sperrventil ein handbetätigter Kugelhahn. Eine weitere bevorzugte Ausgestaltung ist eine automatisierte mechanische Betätigung, bei der das Ventil beispielsweise auf einen Anschlag aufläuft, wobei das Auflaufen auf den Anschlag mit dem Erreichen einer Verriegelungsstellung einhergeht. Ein solcher Anschlag kann beispielsweise an dem Transportbehälter vorgesehen sein, während das Hydrauliksperrventil oder ein damit verbundenes Ansteuerglied mit dem Verriegelungselement verbunden ist. Mit einem solchen Anschlag kann auch eine pnematische Betätigung des Hydrauliksperrventils bewirkt werden. Vorzusgsweise hat das Hydrauliksperrventil eine Stellung, in der es Hydraulikflüssigkeit passieren lässt, und eine Stellung, in der es für die Hydraulikflüssigkeit gesperrt ist.

In allen vorgenannten Ausführungsformen können Fluidkanäle und/oder Ventile zu hydraulischen und/oder pneumatischen Zylindern an oder in den jeweiligen Zylindern verlegt sein. Auf diese Weise wird eine blockförmige und unempfindliche Ausführung der Verriegelungsvorrichtung erreicht. Besonders bevorzugt sind alle Zylinder in einem gemeinsamen Gehäuse zusammengefasst.

In einem weiteren Aspekt der vorliegenden Erfindung wird ein Lastentransportfahrzeug gemäß einer der vorangehenden Ausführungsformen vorgeschlagen. Insbesondere sind Lastentransportfahrzeuge Lastkraftwagen und deren Anhänger, ganz besonders Absetzkipper. In einer Ausführungsform wird ein Lastentransportfahrzeug mit mehreren Verriegelungsvorrichtungen vorgeschlagen, wobei ein Element einer Verriegelungsvorrichtung für mehrere Verriegelungsvorrichtungen nutzbar ist, insbesondere ein fluidtechnisches Schaltelement, ein Pneumatik-Hydraulik-Wandler, ein Druckspeicher, ein Pneumatikzylinder, ein hydraulischer Verdrängungszylinder, Hydraulikflüssigkeit, ein Verriegelungsfederelement, ein Entriegelungsfederelement und/oder weitere Elemente der Verriegelungsvorrichtung. Durch die Nutzung eines oder mehrerer der genannten oder noch weiterer Elemente für mehrere Verriegelungsvorrichtungen können insgesamt Bauteile eingespart werden und das Lastentransportfahrzeug kostengünstiger hergestellt werden.

Im Folgenden sind Ausführungsformen der vorliegenden Erfindung mit Bezug auf die Zeichnungen im Anhang beispielhaft beschrieben, in denen:
- Figur 1: einen schematischen fluidtechnischen Schaltplan einer Ausführungsform der Verriegelungsvorrichtung zeigt,
- Figur 2: schematisch einen weiteren fluidtechnischen Schaltplan einer Ausführungsform der Verriegelungsvorrichtung zeigt,
- Figur 3: schematisch einen fluidtechnischen Schaltplan einer dritten Ausführungsform der Verriegelungsvorrichtung zeigt,
- Figur 4: schematisch ein Lastentransportfahrzeug mit einer schematisch dargestellten Verriegelungsvorrichtung nach der Erfindung zeigt,
- Figur 5: schematisch einen fluidtechnischen Schaltplan einer weiteren Ausführungsform der Verriegelungsvorrichtung mit zwei Verriegelungszylindern und zwei Verriegelungselementen zeigt, und
- Figur 6: schematisch einen fluidtechnischen Schaltplan einer weiteren weiteren Ausführungsform mit zwei Verriegelungszylindern und zwei Verriegelungselmenten zeigt.

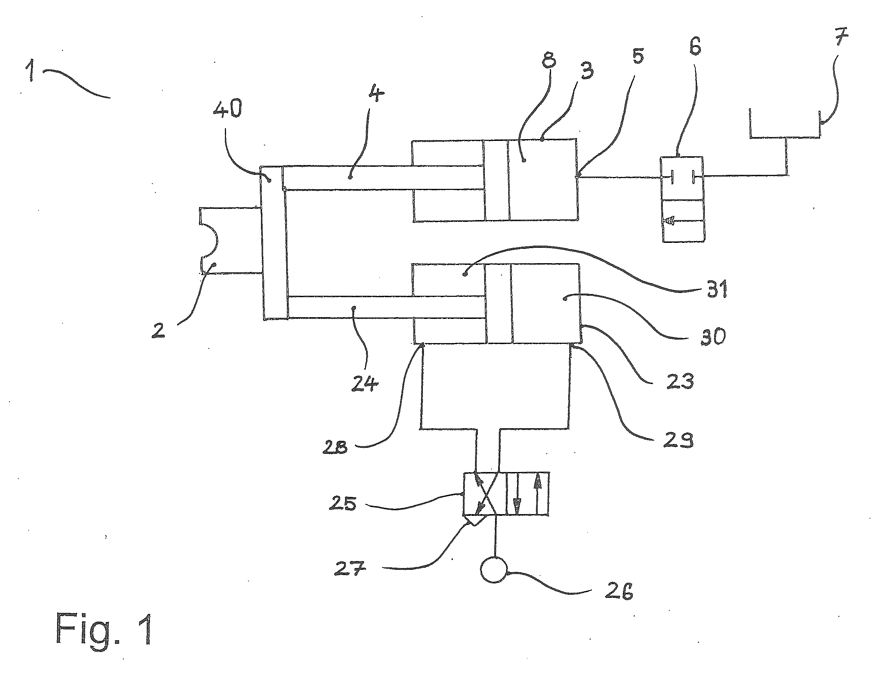

Figur 1 zeigt schematisch und teilweise unter Verwendung von üblichen fluidtechnischen Symbolen eine erste Ausführungsform der Verriegelungsvorrichtung 1. Die Verriegelungsvorrichtung umfasst ein Verriegelungselement 2, das schematisch und beispielhaft als Klaue dargestellt ist. In der Praxis kann das Verriegelungselement anders geformt sein und zusätzlich weitere Elemente umfassen, die beispielsweise ein Klappen, Schwenken, Verschieben oder dergleichen des Verriegelungselements ermöglichen. Das Verriegelungselement kann auch Führungen und Drehgelenke umfassen.

Ein Verriegelungselement wie oben beschrieben kann in allen Ausführungsformen zur Anwendung kommen und ist in allen Figuren jeweils als klauenförmiges Verriegelungselement 2 symbolisiert. Weiter umfasst die Verriegelungsvorrichtung 1 der in der Figur 1 gezeigten ersten Ausführungsform einen Verriegelungszylinder 3, welcher einen Verriegelungskolben mit einer Kolbenstange 4 umfasst. Der Verriegelungszylinder 3 ist als Hydraulikzylinder ist in dieser Ausführungsform bevorzugt einfach wirkend ausgeführt. Ein Anschluss 5 an die Zylinderkammer des Hydraulikzylinders 3 ist mit einem 2/2-Wegeventil 6 verbunden. Mittels des 2/2-Wegeventils kann ein Hydraulikfluiddurchfluss von einem Reservoir 7 zu dem Anschluss 5 geöffnet oder geschlossen werden. Die Verriegelungsvorrichtung 1 weist weiter einen Pneumatikzylinder 23 auf, der eine Pneumatikkolbenstange 24 umfasst. Der Kolben kann jeweils auch nur die Kolbenstange umfassen. Die Kolbenstange 24 ist mechanisch mit der Kolbenstange 4 des Verriegelungszylinders über eine mechanische Verbindung 40 verbunden. Mit der mechanischen Verbindung 40 zwischen den beiden Kolbenstangen 4 und 24 ist außerdem das Verriegelungselment 2 verbunden. Der Pneumatikzylinder 23 kann über ein 4/2-Wegeventil 25 betätigt werden. Das 4/2-Wegeventil ist jeweils mit dem Anschluss 28 bzw. 29 jeder der Kammern verbunden. Das 4/2-Wegeventil 25 ist mit einer Pneumatikdruckversorgung 26 und einer vorzugsweise als Entllüftung 27 ausgestalteten Ableitung verbunden. Durch Umschalten des 4/2-Wegeventils 25 kann erreicht werden, dass in einer Schaltstellung eine der beiden Kammern belüftet und die andere entlüftet wird, während in der anderen Schaltstellung Belüftung und Entlüftung in Bezug auf die beiden Kammern vertauscht sind. Auf diese Weise kann die Kolbenstange 24 in beide Richtungen bewegt werden. Alternativ zu dem 4/2-Wegeventil 25 können andere Ventile verwendet werden, um die selbe Funktion bereitzustellen, beispielsweise einzelne Ventile, die jeweils mit einem der Anschlüsse der Kammern verbunden sind.

Durch das Belüften der Kammer 30, das ein Ausfahren der Kolbenstange 24 bewirkt, wird auch bewirkt, dass die Kolbenstange 4 aus dem Verriegelungszylinder 3 gezogen wird. Dies ist möglich, wenn das 2/2-Wegeventil 6 auf Durchfluss geschaltet ist, so dass Hydraulikflüssigkeit aus dem Reservoir 7 in die Kammer des Verriegelungszylinders 5 strömen kann. Beide Kolbenstangen 4 und 24 der beiden Zylinder 3 und 23 fahren dann gemeinsam aus, wodurch das Verriegelungselement 2 in Verriegelungsstellung gebracht wird und der Verriegelungszylinder mit Hydraulikflüssigkeit gefüllt wird. Sodann kann zur Arretierung des Verriegelungszylinders das 2/2-Wegeventil in Unterbrechungsstellung gebracht werden, so dass aus der Kammer des Verriegelungszylinders 3 keine Hydraulikflüssigkeit mehr austreten kann. Somit kann die Kolbenstange 4 nicht wieder in den Verriegelungszylinder 3 eintauchen, wodurch das Verriegelungselement 2 in seiner Position arretiert wird.

Zum Überführen des Verriegelungselements in seine Entriegelungsstellung kann das 2/2-Wegeventil 6 geöffnet werden und auf die Kammer 31 des Pneumatikzylinders 23 Pneumatikdruck gegeben werden. Dadurch tauchen die Kolbenstangen 24 und 4 in ihre jeweiligen Zylinder 23 bzw. 3 ein, wodurch das Verriegelungselement 2 aus seiner Verriegelungsstellung in die Entriegelungsstellung bewegt wird. Die Hydraulikflüssigkeit in dem Verriegelungszylinder 3 wird in das Reservoir 7 gedrückt. Die Verbindung 40 zwischen den Kolbenstangen 24 und 4 sowie dem Verriegelungselement 2 ist in der Figur 1 nur schematisch dargestellt und kann geometrisch von der gezeigten Ausführung beliebig abweichen.

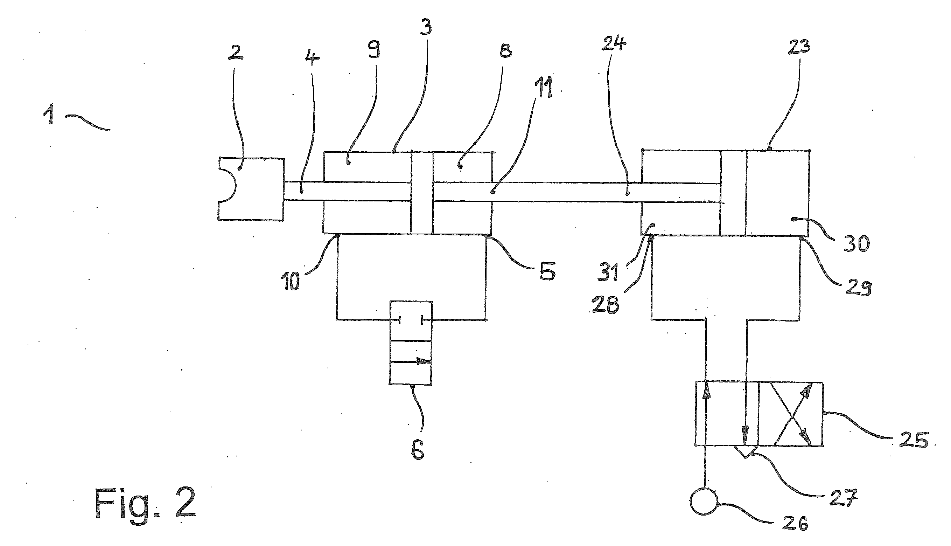

Figur 2 zeigt schematisch eine weitere Ausführungsform der Verriegelungsvorrichtung als fluidtechnisches Schaltbild. Diese unterscheidet sich von der Ausführungsform, die in Figur 1 gezeigt ist, dadurch, dass der Verriegelungszylinder als ein Gleichlaufzylinder ausgeführt ist, der wie in Figur 1 eine Kammer 8 für die Verriegelungsfunktion umfasst, zusätzlich jedoch eine weitere Kammer 9, mit der der Hydraulikzylinder 3 als Verdrängungszylinder wirken kann. Elemente mit gleicher Funktion sind mit den gleichen Bezugsziffern wie in der Figur 1 bezeichnet. Der Anschluss 10 an die Kammer 9 des als Verdrängungszylinder wirkenden Teils des Gleichlaufzylinders 3 ist über das 2/2-Wegeventil 6 mit dem Anschluß 5 der Kammer 8 verbunden, die die Verriegelungsfunktion des als Verriegelungszylinder wirkenden Gleichlaufzylinders 3 übernimmt. Das Verriegelungselement 2 ist mit der Kolbenstange 4 mechanisch verbunden. Bei einer Bewegung der Kolbenstange 4 derart, dass das Volumen der Kammer 9 verkleinert wird, vergrößert sich im gleichen Maße das Volumen der Kammer 8, so dass Hydraulikflüssigkeit von dem Anschluss 10 der Kammer 9 zu dem Anschluss 5 der Kammer 8 fließen kann, wozu das 2/2-Wegeventil 6 auf Durchfluss geschaltet wird. Die Kammer 9 ersetzt somit das Reservoir 7 der in Figur 1 gezeigten Ausführungsform. Der bis hier beschriebene Teil der Figur 2 kann in einer nicht dargestellten weiteren Ausführungsform auf die in Figur 1 gezeigte Weise, d.h., ohne Fluchtung der Kolbenstangen 24 und 11 bzw. 4, mit einem Pneumatikzylinder 23 verbunden sein.

Ein weiterer Unterschied zwischen den in Figur 1 bzw. Figur 2 gezeigten Ausführungsformen besteht wie schon erwähnt darin, dass die Kolbenstange 24 des Pneumatikzylinders 23 fluchtend mit der Kolbenstange 4 des Gleichlaufzylinders 3 angeordnet ist. Besonders bevorzugt bildet die Kolbenstange 24 zugleich die Kolbenstange 11 des Gleichlaufzylinders 3, der die Kammer 8 durchsetzt. In einer nicht dargestellten Ausführungsform sind die Kolbenstange 11 und die Kolbenstange 24 separate, jedoch mechanisch miteinander verbundene Elemente. Ebenso wie in der Ausführungsform der Figur 1 ist zur Betätigung des Pneumatikzylinders 23 ein 4/2-Wegeventil 25 vorgesehen. Bei Belüftung der Kammer 30 des Pneumatikzylinders 23 und Entlüftung der Kammer 31 des Pneumatikzylinders 23 wird die Kolbenstange 24 aus dem Pneumatikzylinder 23 ausgerückt und schiebt zugleich die Kolbenstangen 11 und 4 des Gleichlaufzylinders 3 vor. Dies ist jedoch nur möglich, wenn das 2/2-Wegeventil 6 auf Durchlass geschaltet ist. Durch diese Bewegung der Kolbenstangen 24, 11 und 4 kann das Verriegelungselement 2 in Verriegelungsstellung gebracht werden. Wenn diese erreicht ist, kann das 2/2-Wegeventil 6 in Sperrstellung geschaltet werden, wodurch der Gleichlaufzylinder 3 arretiert wird, indem aus der Kammer 8 des Gleichlaufzylinders 3, die als Verriegelungszylinder wirkt, keine Hydraulikflüssigkeit mehr austreten kann, wodurch wiederum die Kolbenstange 11 nicht mehr aus dem Gleichlaufzylinder 3 austreten kann. Das Verriegelungselement 2 wird dadurch an der Position, die es zum Schaltzeitpunkt des 2/2-Wegeventils hat, arretiert.

Um das Verriegelungselement 2 in seine Entriegelungsstellung zu überführen, kann das 4/2-Wegeventil 25 in eine Stellung gebracht werden, in der die Kammer 31 des Pneumatikzylinders 23 belüftet und die Kammer 30 entlüftet wird. Dadurch rückt die Kolbenstange 24 des Pneumatikzylinders 23 in den Pneumatikzylinder 23 ein, wobei die Kolbenstangen 11 und 4 in gleichem Maße mitbewegt werden. Dadurch strömt Hydraulikflüssigkeit von dem Anschluss 5 der Kammer 8 zu dem Anschluss 10 der Kammer 9 des Gleichlaufzylinders 3, wozu das 2/2-Wegeventil 6 geöffnet wird. Wenn sich das Verriegelungselement 2 in der Entriegelungsstellung befindet, kann das 2/2-Wegeventil 6 wieder geschlossen werden. Alternativ zu dem gezeigten 4/2-Wegeventil können auch einzelne Ventile mit den Anschlüssen 28 und 29 des Pneumatikzylinders 23 verbunden sein, um die Kammern 30 und 31 zu be- bzw. entlüften. Dies können beispielsweise einzelne 3/2-Wegeventile sein.

In einer nicht dargestellten Variante können das Gehäuse des Pneumatikzylinders 23 und des Gleichlaufzylinders 3 ein gemeinsames Gehäuse sein. Insbesondere kann die Zylinderbohrung in den Zylindern 3 und 23 gemeinsam hergestellt und durch geeignete Trennelemente voneinander separiert sein. Insbesondere kann eine solche Kombination als Tandemzylinder ausgeführt sein.

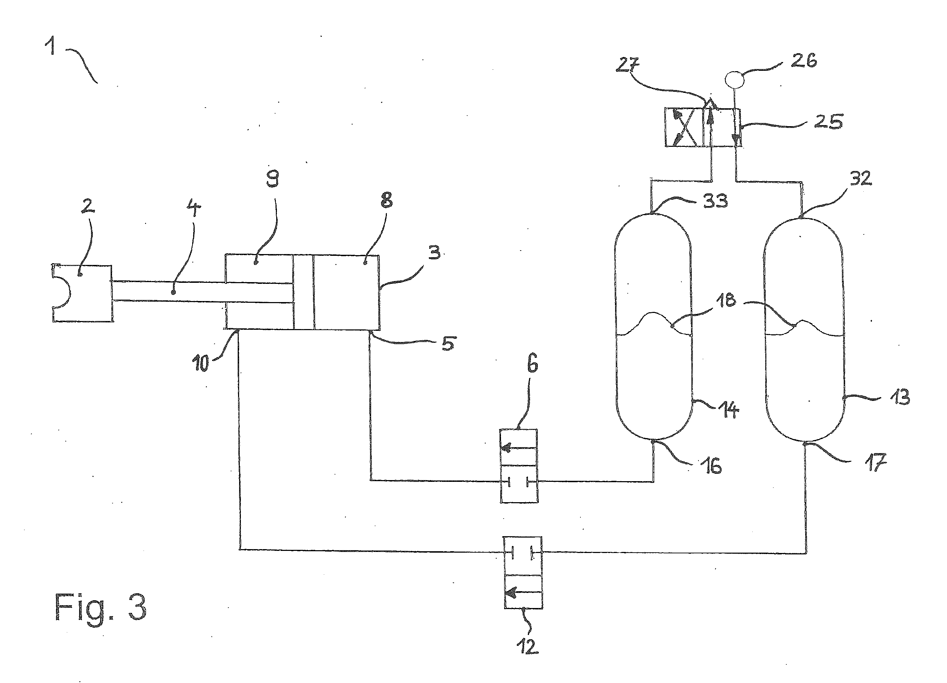

Figur 3 zeigt schematisch ein weiteres Ausführungsbeispiel einer Verriegelungsvorrichtung 1 als fluidtechnisches Schaltbild. Elemente mit gleicher Funktion sind mit den gleichen Bezugsziffern wie in den vorangehenden Ausführungsformen bezeichnet. Die Verriegelungsvorrichtung in dieser Ausführungsform umfasst einen doppeltwirkenden Hydraulikzylinder 3, dessen Kammer 8 die Arretierungsfunktion des Hydraulikzylinders 3 in seiner Funktion als Verriegelungszylinder übernimmt. Die Kammer 8 kann über ihren Anschluss 5 und das 2/2-Wegeventil 6 aus einem Behälter 14 gefüllt bzw. in diesen entleert werden. Dazu wird das 2/2-Wegeventil in seine Durchlassstellung geschaltet. Im Inneren des Behälters 14 befindet sich eine Membran 18, die die Hydraulikflüssigkeit in einem Teil des Behälters 14 von Pneumatikfluid in einem anderen Teil des Behälters fluiddicht trennt. Der Behälter 14 wirkt dabei als Teil des Pneumatik-Hydraulik-Wandlers. Das Ausfahren der Kolbenstange aus dem Zylinder 3 kann bewirkt werden, indem über den Anschluss 33 des Behälters 14 Pneumatikdruck in den Behälter 14 eingeleitet wird. Der Pneumatikdruck wirkt über die Membran 18 auf die in dem Behälter 14 befindliche Hydraulikflüssigkeit, die über den Anschluss 16 des Behälters 14, das 2/2-Wegeventil 6 und den Anschluss 5 in die Kammer 8 des Zylinders 3 einströmt. Dadurch wird die Kolbenstange vorgeschoben und das Verriegelungselement 2 in seine Verriegelungsstellung gebracht. Bei diesem Vorganng wird zugleich Hydraulikflüssigkeit aus der Kammer 9 verdrängt, die über dessen Anschluss 10, das 2/2-Wegeventil 12 und den Anschluss 17 in einen weiteren Behälter 13 einströmt. Der Behälter 13 weist ebenfalls eine Membran 18 auf, die in dem Behälter 13 enthaltene Hydraulikflüssigkeit von einem Pneumatikfluid in einem anderen Teil des Behälters 13 trennt. Durch die einströmende Hydraulikflüssigkeit wird Pneumatikfluid aus dem Behälter 13 verdrängt und verlässt diesen über den Anschluss 32. Entsprechend wird ein 4/2-Wegeventil 25 so geschaltet, dass Pneumatikdruck aus einer Pneumatikdruckversorgung 26 in den Behälter 14 eingeleitet wird und zugleich Pneumatikfluid aus dem Behälter 13 abgeleitet wird. Für diesen Vorgang werden die 2/2-Wegeventile 6 und 12 beide in eine Durchflussstellung geschaltet. Bevorzugt können die 2/2-Wegeventile 6 und 12 mechanisch miteinander gekoppelt sein, so dass sie gemeinsam betätigt werden können. Nach dem Abschluss des Vorschiebens der Kolbenstange 4 wird das 2/2-Wegeventil 6 in eine Sperrstellung gebracht, die einen Rückfluss von Hydraulikflüssigkeit aus der Kammer 8 des Zylinders 3 verhindert. Auf diese Weise wird das Verriegelungselement 2 in seiner Verriegelungsstellung arretiert. Um das Verriegelungselement 2 aus seiner Verriegelungsstelung in eine Entriegelungsstellung zu überführen, wird die Kolbenstange 4 in den Zylinder 3 eingefahren. Dazu kann das 4/2-Wegeventil 25 in eine Stellung gebracht werden, in der der Behälter 13 mit Pneumatikdruck beaufschlagt und Pneumatikfluid aus dem Behälter 14 abgeleitet wird. Die 2/2-Wegeventile 6 und 12 werden dazu in Durchlassstellung geschaltet. Der Pneumatikdruck in dem Behälter 13 führt dazu, dass Hydraulikfluid aus dem Anschluss 17 aus dem Behälter austritt und über das 2/2-Wegeventil 12 und den Anschluss 10 die Kammer 9 füllt. Dadurch wird aus der Kammer 8 Hydraulikfluid verdrängt, das über den Anschluss 5, das 2/2-Wegeventil 6 und den Anschluss 16 in den Behälter 14 eintritt. In dem Behälter 14 wird dadurch Pneumatikfluid verdrängt und über den Anschluss 33 und das 4/2-Wegeventil 25 abgeleitet. Wenn das Verriegelungselement 2 in der Entriegelungsstellung angekommen ist, können die 2/2-Wegeventile 6 und 12 geschlossen werden. In einer nicht dargestellten Ausführungsvariante können die Membranen 18 weggelassen sein, wenn anderweitig sichergestellt ist, dass Hydraulik- und Pneumatikfluid voneinander getrennt bleiben. Dies kann beispielsweise durch eine senkrechte Anordnung von langgestreckten Behältern 13 und 14 erreicht werden, wobei die Anschlüsse 32 und 33 oben und die Anschlüsse 16 und 17 angeordnet sind.

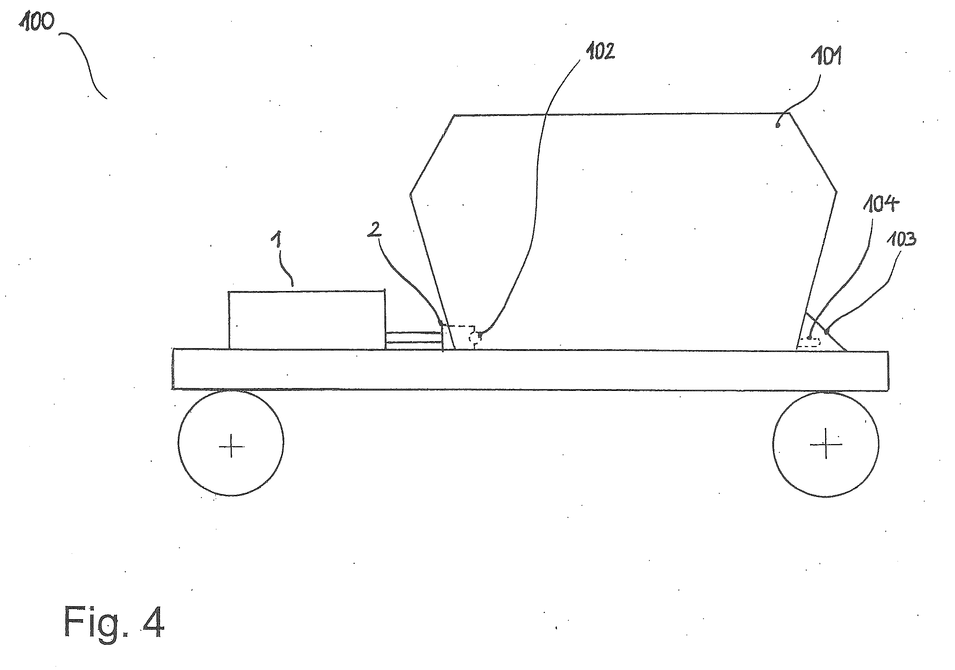

Figur 4 zeigt schematisch ein Lastentransportfahrzeug 100 mit einem Container 101, das mit einer Verriegelungsvorrichtung 1 ausgerüstet ist. Die Verriegelungsvorrichtung 1 ist ohne Details schematisch dargestellt und weist ein Verriegelungselement 2 auf. Das Verriegelungselement 2 ist vorzugsweise mit einem im Inneren des Containers 100 angeordneten und dementsprechend gestrichelt dargestellten Bolzen oder Stift oder einem anderen geeigneten, nur schematisch dargestellten Element 102 im Eingriff, so dass der Container 101 mit dem Lastentransportfahrzeug 100 vorzugsweise formschlüssig verriegelt ist. Dazu ist bevorzugt das Verriegelungselement 2 an einer Führung oder Drehachse an dem Lastentransportfahrzeug 100 befestigt. Eine Bewegung in der Führung bzw. um die Drehachse wird vorzugsweise durch die Verriegelungsvorrichtung 1 bewirkt. An einer anderen Stelle des Containers, vorzugsweise an einem Ende des Containers 101, der dem Bolzen bzw. Stift 102 angewandt ist, kann der Container formschlüssig mit einem nur schematisch dargestellten Halteelement 103 verbunden sein, welches Teil des Lastentransportfahrzeugs ist oder mit diesem verbunden ist. Insbesondere kann ein schematisch und gestrichelt dargestelltes Element 104 des Containers 101 in formschlüssigem Eingriff mit dem Halteelement 103 stehen, insbesondere mit dessen Inneren. Dadurch ist der Container 101 auf der dem Stift bzw. Bolzen 102 abgewandten Seite ebenfalls mit dem Lastentransportfahrzeug verriegelt. Vorzugsweise ist die Verriegelungsvorrichtung 1 in der Lage, durch Bewegen des Verriegelungselements 2 zu bewirken, dass der Container 101 mit seinem Element 104 in formschlüssigem Eingriff mit dem Halteelement 103 tritt. Um dies zu erreichen, ist die Verriegelungsvorrichtung 1 bevorzugt dazu in der Lage, den Container 101 in Bezug auf das Lastentransportfahrzeug 100 zu bewegen, insbesondere über dessen Ladefläche zu schieben. In einer nicht dargestellten Ausführungsform kann die auf dieser Seite des Containers 101 vorgesehene formschlüssige Verbindung ebenfalls durch eine Verriegelungsvorrichtung 1 verriegelt bzw. entriegelt werden. Alternativ zu dem dargestellten Verriegelungssystem aus Klaue 2 und Bolzen bzw. Stift oder anderen geeigneten Elementen 102 können auch andere geeignete Verriegelungsmechanismen zum Einsatz kommen, insbesondere diejenigen, die in der Gebrauchsmusterschrift DE 20 2005 021 742 U1 beschrieben sind.

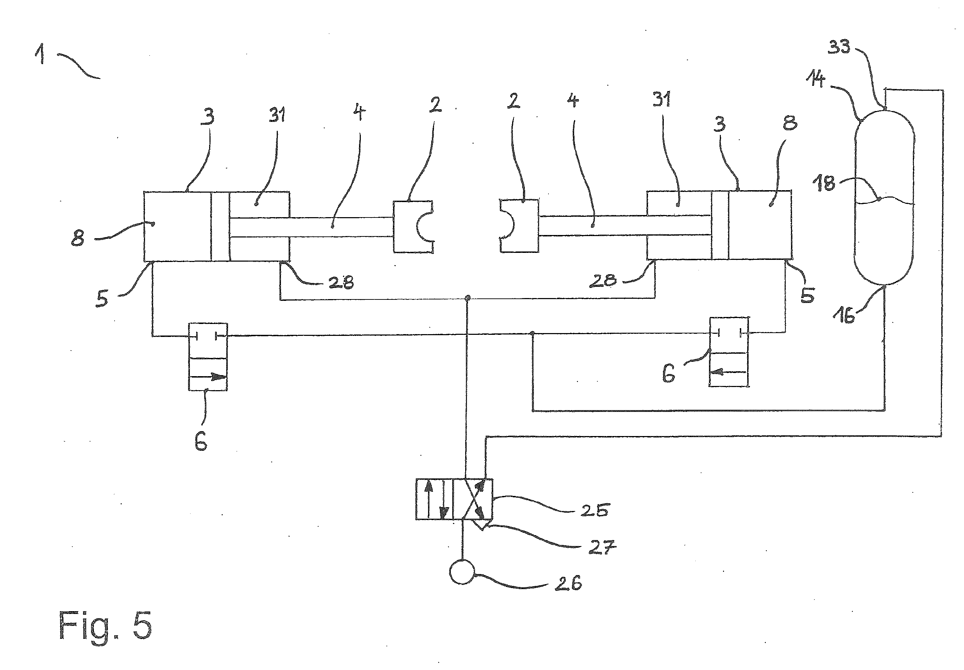

Figur 5 zeigt schematisch eine weitere Ausführungsform der Verriegelungsvorrichtung 1, die mit zwei doppeltwirkenden Zylindern 3 ausgestattet ist, als fluidtechnisches Schaltbild. Jeder der Zylinder 3 kann ein ihm zugeordnetes Verriegelungselement 2 bewegen. Jeder der Zylinder 3 weist eine Kammer 8 auf, die die Funktion eines Verriegelungszylinders hat. Jeder Zylinder 3 weist außerdem die Kammer 31 auf, wobei die Kammer 8 für Hydraulikflüssigkeit und die Kammer 31 für Pneumatikfluid vorgesehen sind. Das 4/2-Wegeventil 25 ist mit den Anschlüssen 28 der Kammern 31 des Zylinders 3 sowie mit dem Anschluss 33 des Behälters 14 verbunden. Die Kammern 8 sind über Anschlüsse 5 und 2/2-Wegeventile 6, die als Hydrauliksperrventile arbeiten, mit einem Behälter 14 über dessen Anschluss 16 verbunden. In dem Behälter 14 ist eine Membran 18 angeordnet, die einen Abschnitt mit Hydraulikflüssigkeit in dem Behälter von einem weiteren Abschnitt mit Pneumatikfluid in dem Behälter trennt. Über den Anschluss 33 des Behälters 14 kann der Behälter 14 mit Pneumatikdruck beaufschlagt werden, der sich über die Membran 18 auf das Hydraulikfluid fortpflanzt. Wenn die 2/2-Wegeventile geöffnet sind, kann durch den Pneumatikdruck Hydraulikflüssigkeit aus dem Anschluss 16 des Behälters 14 austreten und über die beiden 2/2-Wegeventile 6 und die Anschlüsse 5 in die Kammern 8 der Zylinder eintreten. Die 2/2-Wegeventile sind dazu geöffnet. Dadurch werden die Kolbenstangen 4 vorgeschoben, wodurch die Verriegelungselemente 2 in ihre Verriegelungsstellung kommen. Werden sodann die 2/2-Wegeventile 6 geschlossen, werden die Verriegelungselemente 2 in ihrer Verriegelungsstellung arretiert. Die Beaufschlagung des Behälters 14 mit Pneumatikdruck erfolgt über ein 4/2-Wegeventil 25, das an eine Pneumatikdruckversorgung 26 angeschlossen ist. In der Stellung, in der das 4/2-Wegeventil 25 den Behälter 14 mit Pneumatikdruck versorgt, leitet es gleichzeitig Pneumatikfluid aus Kammern 31 der Zylinder 3 ab. Dadurch wird in den Kammern 31 befindliches Pneumatikfluid nicht komprimiert, wenn die Kolbenstange 4 in Richtung der Verriegelungsstellung vorgeschoben wird. Um das Verriegelungselement 2 von der Verriegelungsstellung in die Entriegelungsstellung zurückzubringen, kann das 4/2-Wegeventil 25 in eine andere Stellung gebracht werden, in der die Kammern 31 der Zylinder 3 belüftet werden. Der Pneumatikdruck in den Kammern 31 bewirkt, dass Hydraulikflüssigkeit aus den Kammern 8 über deren Anschlüsse 5, die 2/2-Wegeventile 6 und den Anschluss 16 in den Behälter 14 eintritt, wozu die 2/2-Wegeventile 6 geöffnet sind. Zugleich bewirkt die Entriegelungsstellung des 4/2-Wegeventils 25, dass Pneumatikfluid über den Anschluss 33 aus dem Behälter 14 abgeleitet werden kann. Wenn die Verriegelungselemente 2 in ihrer Entriegelungsstellung angekommen sind, können die 2/2-Wegeventile 6 geschlossen werden, um die Verriegelungselemente 2 in ihrer Entriegelungsstellung zu arretieren. Vorzugsweise ist die Betätigung der 2/2-Wegeventile 6 miteinander gekoppelt, so dass sie durch eine Aktion, die auf beide 2/2-Wegeventile 6 wirkt, betätigt werden können. Alternativ zu der in Figur 5 dargestellten Ausführungsform ist es möglich, die Verriegelungsvorrichtung 1 mit nur einem der Zylinder 3 auszuführen. Jeweils eines der mit gleichen Bezugsziffern bezeichneten Elemente entfällt in diesem Fall.

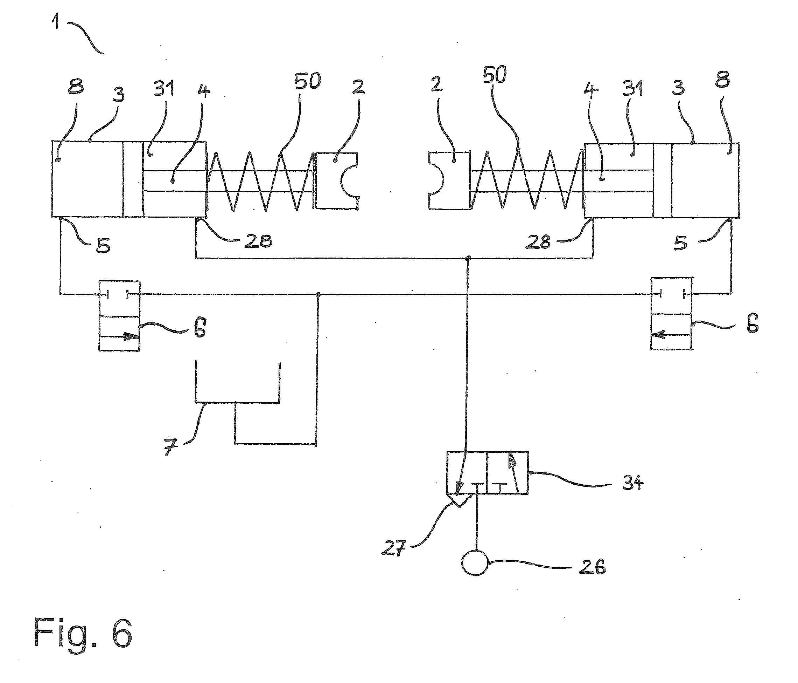

Figur 6 zeigt schematisch eine Ausführungsform der Verriegelungsvorrichtung 1, die der in Figur 5 gezeigten Ausführungsform in Teilen gleicht, als fluidtechnisches Schaltbild. Insbesondere weist die in der Figur 6 gezeigte Ausführunsform ebenfalls zwei doppeltwirkende Zylinder 3 auf, deren Kammern 8 mit Hydraulikflüssigkeit betrieben werden, während deren Kammern 31 mit Pneumatikfluid betrieben werden. Auch kann die Kammer 8 der beiden Zylinder 3 durch ein 2/2-Wegeventil 6, das als Hydrauliksperrventil arbeitet, abgeschlossen werden, um das Verriegelungselement 2 zu arretieren. Die Kammern 31 des Zylinders 3 können über deren Anschlüsse 28 aus einem 3/2-Wegeventil 34 mit Pneumatikdruck aus einer Pneumatikdruckversorgung 26 beaufschlagt werden. Durch diese Druckbeaufschlagung der Kammern 31 der Zylinder 3 kann über die Anschlüsse 28 bewirkt werden, dass die Verriegelungselemente 2 von ihrer Verriegelungsstellung in ihre Entriegelungsstellung überführt werden. Die Kolbenstangen 4 werden dazu in die Zylinder 3 eingefahren. Dabei wird abweichend von der Ausführungsform in der Figur 5 je ein Verriegelungsfederelement 50 komprimiert, das in der Figur 6 jeweils beispielhaft als Schraubenfeder dargestellt ist, die jeweils um die Kolbenstange 4 herum angeordnet ist. Dabei wird außerdem aus den Kammern 8 verdrängte Hydraulikflüssigkeit über deren Anschlüsse 5 und die geöffneten 2/2-Wegeventile 6 in ein Reservoir 7 geleitet. Wenn die Verriegelungselemente 2 in ihrer Entriegelungsstellung sind, sind die Verriegelungsfederelemente 50 in Richtung der Verriegelungsstellung vorgespannt. Um die Verriegelungselemente 2 in der Entriegelungsstellung zu halten, sind die 2/2-Wegeventile 6 geschlossen. Werden diese geöffnet, so ermöglicht dies den Federkräften, die Kolbenstangen 4 in Richtung der Verriegelungsstellung vorzuschieben, wobei die Kammern 8 mit Hydraulikflüssigkeit aus dem Reservoir 7 gefüllt werden. Zum Vorschieben der Verriegelungselemente 2 wird das 3/2-Wegeventil 34 in eine Stellung gebracht, in der Pneumatikfluid aus den Kammern 31 über deren Anschlüsse 28 abgeleitet werden kann. Insbesondere ist dazu eine Entlüftung 27 vorgesehen. Nach dem Erreichen der Verriegelungsstellung werden die 2/2-Wegeventile 6 geschlossen, um die Verriegelungselemente 2 in ihrer Verriegelungsstellung zu arretieren.

Ebenso wie in der Figur 5 kann einer der Zylinder 3 und ein 2/2-Wegeventil weggelassen werden, um zu einer alternativen Ausführungsform mit nur einem Zylinder 3 und nur einem Verriegelungselement 2 zu kommen. In noch einer weiteren, nicht dargestellten Ausführungsform ist es möglich, noch mehr als zwei Zylinder 3 und entsprechende 2/2-Wegeventile 6 vorzusehen. Die 2/2-Wegeventile können mechanisch miteinander gekoppelt sein, so dass sie zugleich betätigbar sind. Die Zylinder und die Verriegelungselemente können an verschiedenen Stellen an einem Transportfahrzeug oder sogar an verschiedenen, miteinander verbundenen Transportfahrzeugen angeordnet sein. Dies gilt auch für alle anderen Ausführungsformen.

Die in den Figuren 1 - 6 gezeigten Wegeventile können handbetätigt oder automatisiert betätigt sein, insbesondere mit einem Magnetventil. Alternativ zu den in den Ausführungsformen beschriebene Varianten können die Wegeventile in einem nicht gezeigten Ventilschaltblock zusammengefasst sein. Alternativ oder zusätzlich zu der pneumatischen Betätigung der Verriegelungsvorrichtung 1 kann eine manuelle Betätigung vorgesehen sein. Dies gilt ebenfalls für alle Ausführungsformen.

## Patentansprüche

1. Verriegelungsvorrichtung (1) für Lasten für den Transport mit einem Lastentransportfahrzeug (100), insbesondere einem Absetzkipper, und/oder für Fahrzeugteile eines Lastentransportfahrzeugs (100), umfassend einen hydraulischen Verriegelungszylinder (3, 8), ein Hydrauliksperrventil (6), das mit dem Verriegelungszylinder (3, 8) hydraulisch verbunden ist, und ein Verriegelungselement (2), das mechanisch mit dem Verriegelungszylinder (3, 8) verbunden ist, wobei mittels des Verriegelungselements (2) eine Last (101) oder ein Fahrzeugteil mit dem Lastentransportfahrzeug (100) verriegelbar ist, indem das Verriegelungselement (2) von einer Entriegelungsstellung in eine Verriegelungsstellung gebracht wird,
**dadurch gekennzeichnet, dass** pneumatischer Druck unter Verwendung eines Pneumatik-Hydraulik-Wandlers (23, 14, 9, 7, 50, 31) nutzbar ist, um den Verriegelungszylinder (3, 8) mit Hydraulikflüsssigkeit zu füllen, wobei zugleich das Verriegelungselement (2) in die Verriegelungsstellung bringbar ist, und
wobei ein Abfluss von Hydraulikflüssigkeit aus dem Verriegelungszylinder (3, 8) mit dem Hydrauliksperrventil (6) verhinderbar ist, sodass der Verriegelungszylinder (3, 8) hydraulisch arretierbar ist.

2. Verriegelungsvorrichtung (1) nach Anspruch 1, **dadurch gekennzeichnet, dass** der Pneumatik-Hydraulik-Wandler (23, 14, 9, 7, 50, 31) einen Pneumatikzylinder (23, 31) umfasst.

3. Verriegelungsvorrichtung (1) nach Anspruch 2, **dadurch gekennzeichnet, dass** der Pneumatik-Hydraulik-Wandler (23, 14, 9, 7, 50, 31) eine mechanische Verbindung (40, 24, 11) zwischen dem Pneumatikzylinder (23) und dem Verriegelungszylinder (3, 8) umfasst.

4. Verriegelungsvorrichtung (1) nach Anspruch 2, **dadurch gekennzeichnet, dass** der Hydraulik-Pneumatik-Wander (23, 14, 9, 7) einen hydraulischen Verdrängungszylinder (9) umfasst, der hydraulisch mit dem Verriegelungszylinder (3, 8) verbunden ist, und der mechanisch mit dem Pneumatikzylinder (23) verbunden ist, sodass durch Beaufschlagung des Pneumatikzylinders (23) mit pneumatischem Druck der Verriegelungszylinder (3, 8) mit Hydraulikflüssigkeit aus dem Verdrängungszylinder (9) füllbar ist.

5. Verriegelungsvorrichtung (1) nach Anspruch 4, **dadurch gekennzeichnet, dass** der Verdrängungszylinder (9) und der Verriegelungszylinder (3, 8) in einem doppeltwirkenden Zylinder (3), insbesondere in einem Gleichlaufzylinder (3), vereint sind.

6. Verriegelungsvorrichtung (1) nach Anspruch 4, **dadurch gekennzeichnet, dass** der Verdrängungszylinder (9) und der Verriegelungszylinder (3, 8) und bevorzugt auch der Pneumatikzylinder (23) in einem Zylinderelement, vorzugsweise ein einem Tandemzylinder, vereint sind.

7. Verriegelungsvorrichtung (1) nach einem der Ansprüche 2 bis 6, **dadurch gekennzeichnet, dass** der Pneumatikzylinder (23) als doppeltwirkender Pneumatikzylinder (3) ausgeführt ist.

8. Verriegelungsvorrichtung (1) nach Anspruch 1, **dadurch gekennzeichnet, dass** der Pneumatik-Hydraulik-Wandler (23, 14, 9, 7) einen druckfesten Behälter mit einem innenliegenden Trennelement (18), insbesondere einer Membran (18), umfasst, wobei das Trennelement (18) den Behälter (14) in eine Hydraulikkammer mit einem Hydraulikanschluss (16) und eine Pneumatikkammer mit einem Pneumatikanschluss (33) mit jeweils variablem Volumen fluiddicht unterteilt, sodass bei Beaufschlagung der Pneumatikkammer mit pneumatischem Druck Hydraulikflüssigkeit, die einen Hydraulikdruck aufweist, aus der Hydraulikkammer entnehmbar ist, wobei mit der entnommenen Hydraulikflüssigkeit der Verrieglungszylinder (3, 8) füllbar ist.

9. Verriegelungsvorrichtung (1) nach Anspruch 8, **dadurch gekennzeichnet, dass** der Verriegelungszylinder (3, 8) als doppeltwirkender Hydraulikzylinder (3) ausgeführt ist.

10. Verriegelungsvorrichtung (1) nach einem der vorangehenden Ansprüche, **dadurch gekennzeichnet, dass** das Entriegeln der Verriegelungsvorrichtung (1) durch Überführen eines Verriegelungselements (2) von der Verriegelungsstellung in die Entriegelungsstellung durch Federkraft eines Entriegelungsfederelements bewirkbar ist.

11. Verriegelungsvorrichtung (1) nach Anspruch 1, **dadurch gekennzeichnet, dass** der Pneumatik-Hydraulik-Wandler (23, 14, 9, 7, 50) ein pneumatisch vorspannbares Verriegelungsfederelement (50) umfasst, mittels dessen Vorspannung der hydraulische Verriegelungszylinder (3, 8) mechanisch von der Entriegelungsstellung in die Verriegelungsstellung des Verriegelungselements (2) bewegbar ist, sodass sich der Verriegelungszylinder (3, 8) mit Hydraulikflüssigkeit füllt.

12. Verriegelungsvorrichtung (1) nach einem der vorangehenden Ansprüche, **dadurch gekennzeichnet, dass** das Hydrauliksperrventil (6) handbetätigbar, oder elektrisch oder elektromechanisch, beispielsweise elektromagnetisch, automatisiert mechanisch oder pneumatisch betätigbar ist.

13. Lastentransportfahrzeug (100) mit einer Verriegelungsvorrichtung (1) nach einem der vorangehenden Ansprüchen.

14. Lastentransportfahrzeug (100) mit mehreren Verriegelungsvorrichtungen (1), wobei ein Element einer Verriegelungsvorrichtung (1) für mehrere Verriegelungsvorrichtungen (1) nutzbar ist, insbesondere ein fluidtechnisches Schaltelement (6, 12, 25, 34), ein Pneumatik-HydraulikWander (23, 14, 9, 7, 50, 31), ein Druckspeicher (13, 14), ein Pneumatikzylinder (23), ein hydraulischer Verdrängungszylinder (9), Hydraulikflüssigkeit, ein Verriegelungsfederelement (50) und/oder ein Entriegelungsfederelement.
